# EUROPÄISCHE PATENTSCHRIFT

(11) **EP 0 486 435 B1**
(45) Veröffentlichungstag und Bekanntmachung des Hinweises auf die Patenterteilung: **01.03.1995**
(21) Anmeldenummer: 91810893.7
(22) Anmeldetag: 15.11.1991
(51) Int. Cl.: A47J 31/40, A47J 31/44

(54) **Brühvorrichtung, insbesondere für eine Kaffeemaschine**
Brewing device, in particular for a coffee machine
Dispositif d'extraction, en particulier pour une machine à café

(30) Priorität: 16.11.1990 CH 3652/90
(43) Veröffentlichungstag der Anmeldung: 20.05.1992
(73) Patentinhaber: JURA ELEKTROAPPARATE AG, CH-4626 Niederbuchsiten (CH)
(72) Erfinder: Torma, Mikael, W-4612 Wangen b. Olten (CH)
(74) Vertreter: Tschudi, Lorenz

(56) Entgegenhaltungen:
- EP-A- 0 154 206
- EP-A- 0 295 565
- EP-A- 0 407 365
- FR-A- 2 409 032
- FR-A- 2 424 010
- US-A- 4 688 474

## Beschreibung

Die vorliegende Erfindung bezieht sich auf eine Brühvorrichtung insbesondere für eine Kaffeemaschine mit Seitenplatten zur Befestigung von Einzelteilen der Brühvorrichtung, mit einer verschiebbaren Brühkammer, einem Brühkolben, einem Wasseranschluss sowie Mitteln zum Verschieben der Brühkammer von einer Einfüllstellung in eine Brühstellung. Im weiteren bezieht sich die Erfindung auf eine Funktionsbaugruppe für eine Kaffemaschine sowie auf eine Kaffeemaschine.

Aus dem Stand der Technik ist eine Kaffeemaschine mit einem Gehäuse, einem darin eingebauten Frischwasservorratstank, einem Heizaggregat zur Erhitzung des Frischwassers und einer Förderpumpe zur Förderung des erhitzten Wassers unter Druck zu einer Brühkammer, die mit einem Verschlussorgan, einem Kaffeepulvereinlass sowie einem Kaffeeauslass versehen ist, vorbekannt. Dabei sind sämtliche mit dem Kaffeepulver bzw. Kaffee in Berühung kommenden Teile der Maschine, nämlich die Brühkammer, deren Verschlussorgan, der Kaffeepulvereinlass und der Kaffeeauslass zu einer Baugruppe zusammengefasst, die lösbar in das Gehäuse der Maschine eingesetzt ist. Die verbleibenden Teile, insbesondere der Wassertank, das Heizaggregat und die Pumpe sowie die erforderlichen Antriebs-Steuer- und Regelvorrichtungen sind fest in das Gehäuse eingebaut und werden mit der genannten Baugruppe beim Einsetzen derselben in das Gehäuse gekoppelt. Diese bekannte Vorrichtung weist den Nachteil auf, dass die Baugruppe beim Einsetzen in das Gehäuse der Kaffeemaschine, insbesondere an den Wasseranschluss, an die Kaffeemühle und an das Antriebsglied des Motors adaptiert werden muss. Diese Baugruppe kann nur in einer Richtung in das Gehäuse eingesetzt werden. Insbesondere bedeutet der Anschluss an das Antriebsglied des Motors beim Einsetzen der Baugruppe in das Gehäuse eine zusätzliche Fehlerquelle.

Aus der FR-A-2 424 010 ist eine Vorrichtung mit einer Brühkammer, einem Brühkolben, einem Wasseranschluss sowie Verschiebemitteln für die Brühkammer vorbekannt. Der Motor gemäss dieser Druckschrift ist nicht integriert in einer Brühvorrichtung und nicht symmetrisch zu einer Mittelebene der Vorrichtung.

Aus der FR-A-2 409 032 resp. aus der parallelen DE-A-28 17 423 ist eine Maschine zur automatischen Zubereitung von Espressokaffee vorbekannt, die insbesondere zum Einsatz in Kaffeeautomaten geeignet ist. Die Maschine weist zwei vertikale Platten auf, zwischen denen die Einzelteile angeordnet sind, wobei die Einzelteile, insbesondere der Motor, nicht symmetrisch bezüglich einer Mittelebene zwischen den vertikalen Platten angeordnet sind.

Aus der EP-A-0 407 365 ist eine Brühvorrichtung vorbekannt, deren Gehäuse zwei Seitenplatten aufweist, wobei die Elemente der Brühvorrichtung zum Teil innerhalb dieser Seitenplatten angeordnet sind. Zumindest der Getriebemotor sowie der Wasseranschluss sind seitlich angeordnet und nicht symmetrisch zu einer Mittelebene bezüglich der Seitenplatten.

Die Erfindung ist durch die kennzeichnenden Merkmale des Anspruch 1 beschrieben. Die Erfindung schafft eine Brühvorrichtung für eine Kaffeemaschine, die von mehreren Richtungen in die Kaffeemaschine eingebaut werden kann. Insbesondere sind vermieden, dass die Brühvorrichtung noch an das Antriebsglied eines Motors angeschlossen werden muss. Die Brühvorrichtung ist insofern autonom, als sie lediglich einen Wasseranschluss, eine Kaffeepulverzufuhr sowie eine Stromzuführung benötigt. Im weiteren ist, die Brühvorrichtung derart ausgebildet, dass eine grössere Variabilität für den Einbau in eine Kaffeemaschine und mehr Freiraum für die Anordnung der Peripheriegeräte in der Kaffeemaschine erzielt wird.

Im weiteren sind durch die vorliegende Erfindung eine Funktionsbaugruppe für eine Kaffemaschine geschafft, in welcher die Brühvorrichtung von beiden Seiten und von vorn eingebaut werden kann. Dies wird dadurch erzielt, dass die einzelnen Peripheriegeräte etwa in der Form eines U angeordnet sind.

Im folgenden werden anhand der beiliegenden Zeichnung Ausführungsbeispiele der Erfindung sowie deren Verwendung näher beschrieben. Es zeigen:
- **Fig. 1**: eine Seitenansicht eines ersten Ausführungsbeispieles einer Brühvorrichtung,
- **Fig. 2**: eine Hinteransicht gemäss Pfeil A des ersten Ausführungsbeispieles,
- **Fig. 3**: eine Seitenansicht eines zweiten Ausführungsbeispieles einer Brühvorrichtung,
- **Fig. 4**: eine Seitenansicht eines dritten Ausführungsbeispieles einer Brühvorrichtung,
- **Fig. 5**: eine Seitenansicht eines vierten Ausführungsbeispieles einer Brühvorrichtung,
- **Fig. 6**: ein Detail des Antriebs des ersten und zweiten Ausführungsbeispieles,
- **Fig. 7**: ein Detail des Antriebs des dritten und vierten Ausführungsbeispieles,
- **Fig. 8**: einen schematischen Aufriss der Peripheriegeräte der Kaffeemasachine mit der Brühvorrichtung,
- **Fig. 9**: einen schematischen Seitenriss gemäss Fig. 8,
- **Fig. 10**: einen schematischen Grundriss einer Kaffeemaschine mit Wassertank,
- **Fig. 11**: einen schematischen Grundriss zweier Funktionsbaugruppen mit Wassertank.

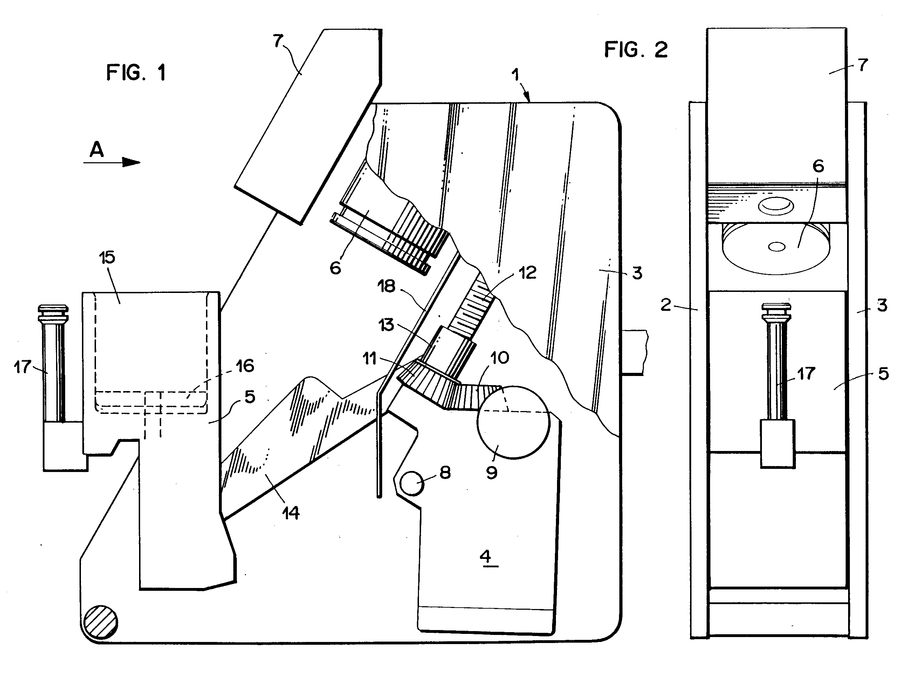

In Fig. 1 ist in Seitenansicht eine Brühvorrichtung 1 für eine Kaffeemaschine dargestellt. Die Fig. 2 zeigt eine Hinteransicht gemäss Pfeil A der Fig. 1. Die Brühvorrichtung 1 umfasst zwei Seitenplatten 2 und 3, innerhalb welcher ein Motor 4, eine Brühkammer 5, ein fester Brühkolben 6 sowie eine Brühwasserzuführung 7 angeordnet sind. Mit dem Motor 4, welcher mit Befestigungselementen 8 und 9 lösbar an den Seitenplatten befestigt ist, wird über Kegelzahnräder 10 und 11 eine Gewindestange 12 in Rotation versetzt. Der lösbare Einbau des Motors weist den Vorteil auf, dass dieser unabhängig von den andern Einzelteilen gereinigt und gewartet werden kann. Auf der Gewindestange ist eine Nuss 13 drehbar aufgesetzt, welche mit einem Bügel 14 verbunden ist, der an der Brühkammer 5 befestigt ist. Mit dem beschriebenen Antrieb kann die Brühkammer 5 von einer in Fig. 1 dargestellten Position zum Einfüllen des Kaffeepulvers in eine nicht dargestellte Brühposition verschoben werden. In der Brühposition liegt der oben in der Brühkammer 5 befindliche Brühzylinder 15 am Brühkolben 6 an. In der Brühkammer ist ein beweglicher Kolben 16 zum Ausstossen des gebrühten Kaffeesatzes angeordnet. In der Brühposition greift ein seitlich an der Brühkammer 5 angebrachter Wasseranschluss 17 in die Brühwasserzuführung 7 ein. Zwischen der Brühkammer 5 und dem Brühkolben 6 einerseits und dem Motor 4, dem Getriebe 10, 11 und der Gewindestange 12 andererseits ist ein Schutzblech 18 angeordnet, welches verhindert, dass Wasser oder gebrühter Kaffee in den Motor oder das Getriebe gelangen kann. Das Brühzylindervolumen 15 ist bei dem ersten Ausführungsbeispiel gemäss der Fig. 1 etwa für eine Kaffeepulvermenge von maximal 15 g geeignet, was für mindestens zwei Tassen Kaffee reicht. Diese Ausführungsform eignet sich für Gastbetriebe und Kantinen.

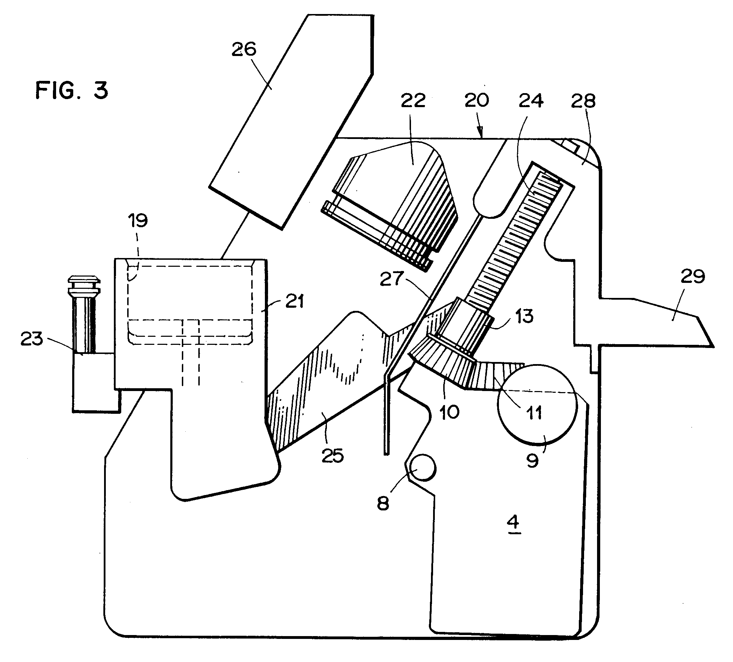

In Fig. 3 ist ein zweites Ausführungsbeispiel der Erfindung dargestellt. Gleiche Teile werden mit denselben Bezugszeichen wie im ersten Ausführungsbeispiel gemäss den Fig. 1 und 2 bezeichnet. Bei dieser Ausführungsform ist der Brühzylinder 19 etwa nur halb so hoch ausgebildet wie beim ersten Ausführungsbeispiel und fasst demnach eine Kaffeepulvermenge von etwa 7,5 g. Durch die kleinere Ausbildung des Brühzylinders kann die gesamte Brühvorrichtung 20 kleiner gestaltet werden. Demzufolge können bei diesem Ausführungsbeispiel auch die Brühkammer 21, der Brühkolben 22, der Wasseranschluss 23, die Gewindestange 24, der Bügel 25, die Brühwasserzuführung 26 und das Schutzblech 27 mit geringerer Bauhöhe bzw. Baulänge hergestellt werden. Im weiteren ist bei dieser Ausführungsform noch die Halterung 28 für die Gewindestange sowie der Kaffeeausguss 29 dargestellt. Die Brühvorrichtung 20 gemäss dem zweiten Ausführungsbeispiel kann beispielsweise für Kaffeemaschinen für den Privathaushalt verwendet werden, bei welcher nur eine Tasse Kaffee auf einmal gebrüht wird.

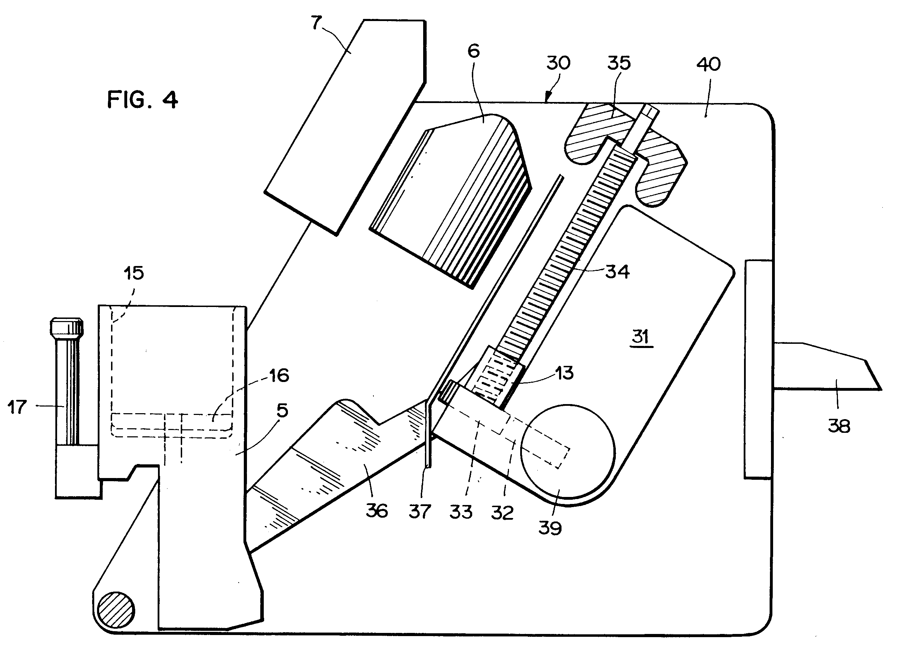

In Fig. 4 ist ein drittes Ausführungsbeispiel der Erfindung dargestellt. Bei der Brühvorrichtung 30 wird ebenfalls wieder eine Brühkammer 5 mit einem grossen Brühzylindervolumen 15 wie beim ersten Ausführungsbeispiel gemäss den Fig. 1 und 2 verwendet. Gleiche Teile wie beim ersten Ausführungsbeispiel werden mit gleichen Bezugszeichen bezeichnet. Im Gegensatz zum ersten Ausführungsbeispiel ist bei der dritten Ausführungsform gemäss Fig. 4 der Motor 31 schräggestellt, wobei dieser Motor ebenfalls etwas anders konstruiert ist als bei der ersten und zweiten Ausführungsform. Die Brühkammer 5, der Brühkolben 6, die Brühwasserzuführung 7, der Brühzylinder 15 und der Wasseranschluss 17 weisen die gleichen Masse auf wie beim ersten Ausführungsbeispiel gemäss den Fig. 1 und 2. Das Antriebsende des Motors mit zwei Zahnrädern 32 und 33 liegt unten, wobei das Zahnrad 33 mit einer Gewindestange 34 verbunden ist. Die Gewindestange 34 ist an ihrem oberen Ende in einer Halterung 35 gehalten. Eine auf der Gewindestange geführte Nuss 13 ist mit einem Bügel 36 verbunden, der am unteren Ende der Brühkammer 5 befestigt ist. Zwischen dem Brühkolben 6 und dem Motor 31 ist ebenfalls ein Schutzblech 37 angeordnet. Im weiteren ist ein Kaffeeausguss 38 vorgesehen und mit Haltemitteln 39 zu dessen Befestigung an den Seitenplatten 40 versehen. Das dritte Ausführungsbeispiel gemäss Fig. 4 ist infolge der Schrägstellung des Motors länger, jedoch weniger hoch als das erste Ausführungsbeispiel gemäss den Fig. 1 und 2 gebaut.

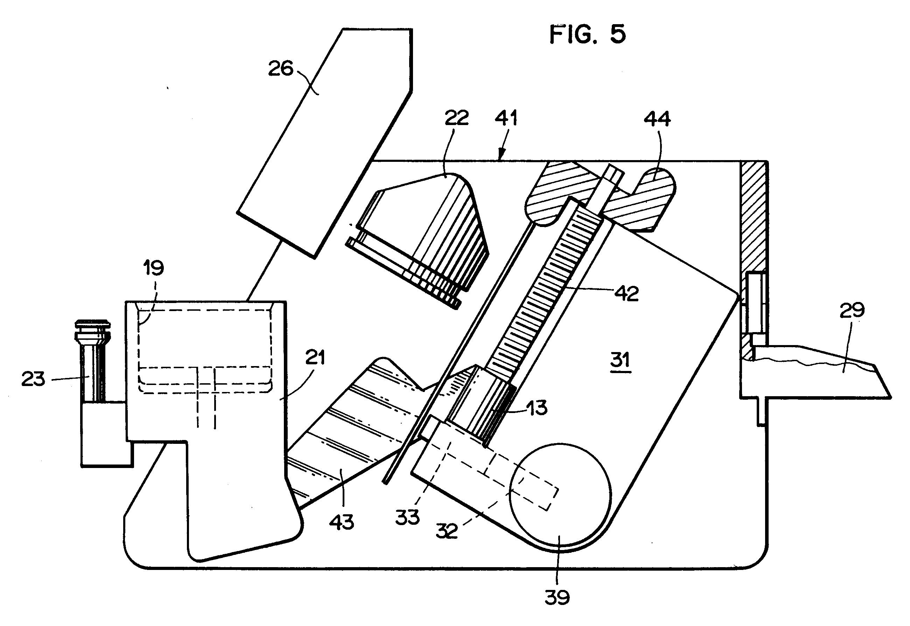

Beim vierten Ausführungsbeispiel gemäss Fig. 5 ist der Motor 31 ebenfalls schräg gestellt. Die Brühkammer 21 dieser Brühvorrichtung 41 weist ebenfalls einen kurzen Brühzylinder 19 für eine kleine Kaffeemenge von ca. 7,5 g auf. Der Antrieb erfolgt ebenfalls über die Zahnräder 32 und 33, eine Gewindestange 42, die Nuss 13 und einen Bügel 43. Die Gewindestange ist in einer Halterung 44 gehalten. Gleiche Teile wie beim zweiten Ausführungsbeispiel gemäss Fig. 3 oder beim dritten Ausführungsbeispiel gemäss Fig. 4 sind mit gleichen Bezugszeichen versehen. Das vierte Ausführungsbeispiel gemäss Fig. 5 ist infolge der Schrägstellung des Motors und des kleinen Brühzylindervolumens kürzer in der Länge und weniger hoch als das dritte Ausführungsbeispiel gemäss Fig. 4 und etwas länger und weniger hoch als das zweite Ausführungsbeispiel gemäss der Fig. 3.

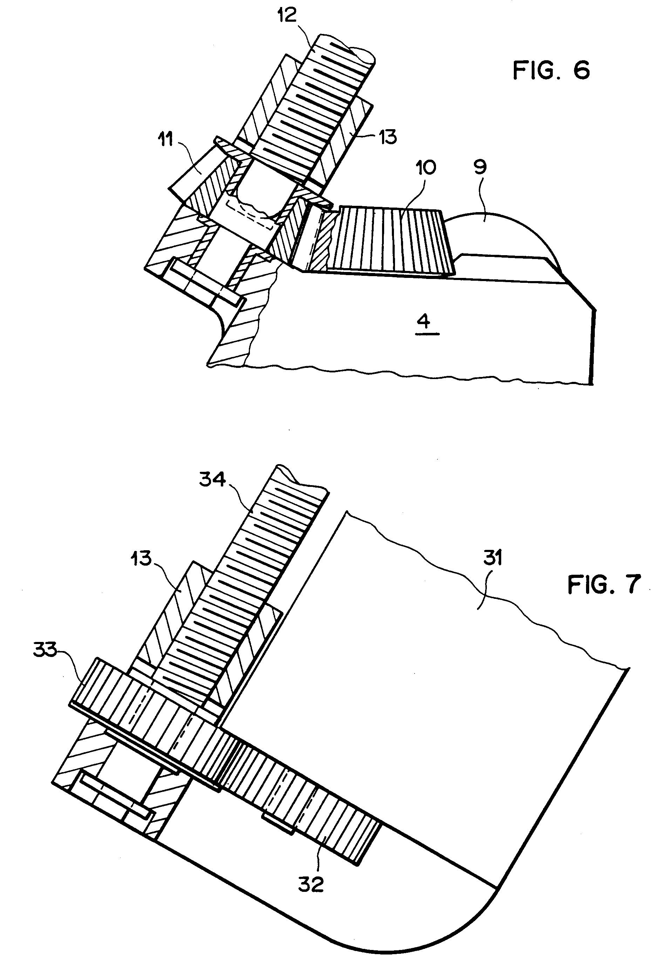

In Fig. 6 ist im Detail die Uebertragung der Antriebskraft vom Motor 4 auf die Gewindestange 12 gemäss dem ersten und zweiten Ausführungsbeispiel dargestellt.

In Fig. 7 ist im Detail die Uebertragung der Antriebskraft vom Motor 31 auf die Gewindestange 34 gemäss dem dritten und vierten Ausführungsbeispiel dargestellt.

Die Brühvorrichtung kann mindestens in vier verschiedenen Grössen hergestellt werden, wobei teilweise gleiche Teile verwendet werden können und infolge der Tatsache, dass die Einzelteile symmetrisch zu der Mittelebene bezüglich der Seitenplatten sind, die Brühvorrichtungen immer dieselbe Tiefe aufweisen. Kleinere Brühvorrichtungen werden beispielsweise für Kaffeemaschinen benötigt, die Einsatz vor allem im Haushalt finden, und grössere Brühvorrichtungen für Kaffeemaschinen, die in Gaststätten Verwendung finden. Die Brühvorrichtung kann von den Seiten her und von vorne eingebaut werden. Die Brühvorrichtung bildet einen variablen Modul für eine Kaffeemaschine.

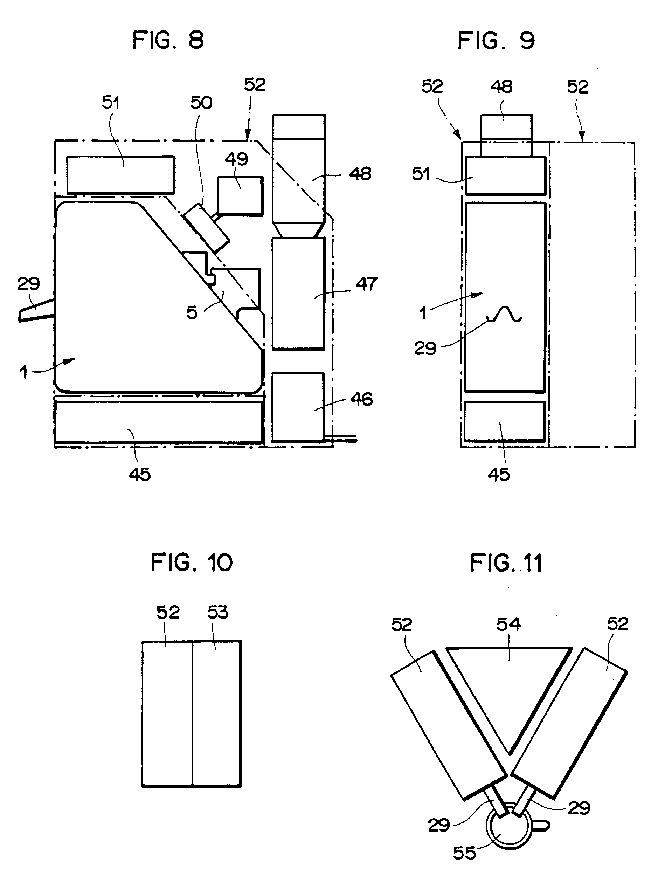

In Fig. 8 ist ein schematischer Aufriss der Peripheriegeräte einer Kaffeemaschine zusammen mit der eingesetzten Brühvorrichtung 1 dargestellt. Die Peripheriegeräte der Kaffeemaschine umfassen einen Tresterbehälter 45, eine Pumpe 46, ein Mahlwerk 47, einen Bohnenbehälter 48, einen Brühwasseraufbereiter 49, einen Wassereinlass 50 sowie eine Regelungseinheit 51 für die Peripheriegeräte. Die Peripheriegeräte sind in der Form eines U angeordnet und umgreifen die Brühvorrichtung von unten, von hinten und von oben. Die Peripheriegeräte weisen vorzugsweise dieselbe Tiefe auf wie die Brühvorrichtung 1. Die Brühvorrichtung 1 kann in die Anordnung der Peripheriegeräte 45- 51 von beiden Seiten her, d.h. senkrecht zur Zeichenebene gemäss Fig. 8 und von vorne, d.h. in Richtung des Kaffeeausgusses 29 eingebaut werden. Die Brühvorrichtung 1 und die Peripheriegeräte bilden eine Funktionsbaugruppe 52, die in variable Gehäuse eingebaut werden kann.

Fig. 9 zeigt einen schematischen Seitenriss der Funktionsgruppe 52 mit der eingesetzten Brühvorrichtung 1. Wie strichpunktiert angedeutet ist, kann eine zweite Funktionsbaugruppe mit Brühvorrichtung danebengestellt werden, wobei die beiden Einheiten zusammen in ein Gehäuse eingebaut werden können und eine doppelte Kaffeemaschine bilden. Es könnten auch mehr als zwei Funktionsbaugruppen eingebaut werden
In Fig. 10 ist schematisch ein Grundriss einer Kaffeemaschine dargestellt, die eine Funktionsgruppe 52 sowie einen daneben angeordneten Wassertank 53 enthält.

In Fig. 11 ist schematisch ein Grundriss einer Kaffeemaschine dargestellt, welche zwei schräg zueinander gestellte Funktionsgruppen 52 und einen dazwischen angeordneten, im Grundriss dreieckförmigen Wassertank 54 umfasst. Mit dieser Kaffeemaschine kann eine einzelne Tasse oder eine Kanne 55 gleichzeitig durch zwei Funktionsbaugruppen 52 gefüllt werden.

Die Brühvorrichtung eignet sich zum lösbaren Einbau in eine Kaffeemaschine und kann leicht gereinigt werden.

Die symmetrische Anordnung einzelner oder aller Einzelteile der Brühvorrichtung ist auch für den OEM von Vorteil.

## Patentansprüche

1. Brühvorrichtung (1, 20, 30, 41), inbesondere für eine Kaffeemaschine mit Seitenplatten (2, 3, 40) zur Befestigung von Einzelteilen der Brühvorrichtung, mit einer verschiebbaren Brühkammer (5, 21), einem Brühkolben (6, 22), einem Wasseranschluss (7, 17, 23, 26) sowie Mitteln (12, 13, 14; 24, 25; 34, 36; 42, 43) zum Verschieben der Brühkammer von einer Einfüllstellung in eine Brühstellung, wobei ein Motor (4; 31) zum Antrieb der Verschiebungsmittel in der Brühvorrichtung selbst angeordnet ist und mindestens der Wasseranschluss (7, 17, 23, 26), die Brühkammer (5, 21) und die Mittel (12, 13, 14; 24, 25; 34, 36; 42, 43) zum Verschieben der Brühkammer von einer Einfüllstellung in eine Brühstellung symmetrisch zu der Mittelebene bezüglich der Seitenplatten (2, 3; 40) angeordnet sind.

2. Brühvorrichtung nach Patentanspruch 1, dadurch gekennzeichnet, dass alle Einzelteile der Brühvorrichtung symmetrisch zu einer Mittelebene bezüglich der Seitenplatten (2, 3; 40) angeordnet sind.

3. Brühvorrichtung nach Patentanspruch 1 oder 2, dadurch gekennzeichnet, dass der Motor (4; 31) lösbar in der Brühvorrichtung gehalten ist.

4. Brühvorrichtung nach einem der vorangehenden Patentansprüche, dadurch gekennzeichnet, dass die Brühkammer (5; 21), der Brühkolben (6; 22) und der Wasseranschluss (7, 17; 23, 26) auf der einen Seite einer Schutzvorrichtung (18;: 27; 37) und der Motor (4; 31) auf der andern Seite der Schutzvorrichtung in der Brühvorrichtung angeordnet sind.

5. Funktionsbaugruppe mit einer Brühvorrichtung nach einem der vorangehenden Patentansprüche und Peripheriegeräten, dadurch gekennzeichnet, dass die Peripheriegeräte (45 - 51) etwa in der Form eines U um die Brühvorrichtung (1) herum gruppiert sind.

6. Funktionsbaugruppe nach Patentanspruch 5, dadurch gekennzeichnet, dass die Peripheriegeräte (45 - 51) symmetrisch zu einer Mittelebene bezüglich der Seitenplatten (2, 3; 40) der Brühvorrichtung (1) angeordnet sind.

7. Kaffeemaschine mit zwei Funktionsbaugruppen nach Patentanspruch 5 oder 6, dadurch gekennzeichnet, dass ein Wassertank (54) zwischen den Funktionsbaugruppen (52) angeordnet ist.

## Claims

1. Brewing device, in particular for a coffee machine, with side plates (2, 3, 40) for mounting component parts of the brewing device, with a displaceable brewing chamber (5, 21), a brewing piston (6, 22), a water supply (7, 17, 23, 26) and means (12, 13, 14; 24, 25; 34, 36; 42, 43) for displacing the brewing chamber from a filling position into a brewing position, a motor (4; 31) for driving the displacement means being disposed in the brewing device itself and at least the water supply (7, 17, 23, 26), the brewing chamber (5, 21) and the means (12, 13, 14; 24, 25; 34, 36; 42, 43) for displacing the brewing chamber from a filling positon into a brewing position being disposed symmetrically to the center plane with respect to the side plates (2, 3; 40).

2. Brewing device according to claim 1, characterized in that all component parts of the brewing device are disposed symmetrically to a center plane with respect to the side plates (2, 3; 40).

3. Brewing device according to claim 1 or 2, characterized in that the motor (4; 31) is supported detachably in the brewing device.

4. Brewing device according to one of the preceding claims characterized in that the brewing chamber (5; 21), the brewing piston (6; 22) and the water supply (7, 17; 23, 26) are disposed in the brewing device on the one side of a shielding (18; 27; 37) and the motor (4; 31) on the other side of the shielding.

5. Functional assembly with a brewing device according to one of the preceding claims and peripheral units characterized in that the peripheral units (45 - 51) are grouped around the brewing device (1) approximately in the shape of a U.

6. Functional assembly according to claim 5, characterized in that the peripheral units (45 - 51) are disposed symmetrically to a center plane with respect to the side plates (2, 3; 40) of the brewing device (1).

7. Coffee machine with two functional assemblies according to claim 5 or 6, characterized in that a water tank (54) is disposed between the functional assemblies (52).

## Revendications

1. Dispositif d'extraction (1, 20, 30, 41) en particulier pour une machine à café, avec des plaques latérales (2, 3, 40) pour la fixation des différentes pièces du dispositif d'extraction avec une chambre d'extraction coulissable (5, 21), un piston d'extraction (6, 22), un raccord d'eau (7, 17, 23, 26) de même que des moyens (12, 13, 14; 24, 25; 34, 36; 42, 43) pour le coulissement de la chambre d'extraction d'une position de remplissage dans une position d'extraction, un moteur (4; 31) étant disposé pour l'entraînement des moyens de coulissement dans le dispositif d'extraction proprement dit et au minimum le raccord d'eau (7, 17, 23, 26), la chambre d'extraction (5, 21) et les moyens (12, 13, 14; 24, 25; 34, 36; 42, 43) de coulissement de la chambre d'extraction étant disposés à partir d'une position de remplissage dans une position d'extraction symétriquement au plan médian relatif aux plaques latérales (2, 3; 40).

2. Dispositif d'extraction selon la revendication 1 du brevet caractérisé en ce que toutes les différentes pièces du dispositif d'extraction sont disposées symétriquement par rapport à un plan médian relatif aux plaques latérales (2, 3; 40).

3. Dispositif d'extraction selon la revendication 1 ou 2 du brevet caractérisé en ce que le moteur (4; 31) est maintenu de façon démontable dans le dispositif d'extraction.

4. Dispositif selon une des revendications précédentes du brevet caractérisé en ce que la chambre d'extraction (5; 21), le piston d'extraction (6; 22) et le raccord d'eau (7, 17; 23, 26) sont disposés sur un côté d'un dispositif de protection (18; 27; 37) et le moteur (4; 31) sur l'autre côté du dispositif de protection dans le dispositif d'extraction.

5. Groupe de fonction avec un dispositif d'extraction selon l'une des revendications précédentes du brevet et périphériques, caractérisé en ce que les périphériques (45-51) sont groupés autour du dispositif d'extraction (1) approximativement sous la forme d'un U.

6. Groupe de fonction selon la revendication 5 du brevet caractérisé en ce que les périphériques (45-51) sont disposés symétriquement par rapport à un plan médian relatif aux plaques latérales (2, 3; 40) du dispositif d'extraction (1).

7. Machine à café avec deux groupes de fonction selon la revendication 5 ou 6 caractérisée en ce que un réservoir d'eau (54) est disposé entre les groupes de fonction (52).
